# EUROPÄISCHE PATENTANMELDUNG

(11) **EP 4 632 328 A1**
(43) Veröffentlichungstag der Anmeldung: **15.10.2025**
(21) Anmeldenummer: 25167650.8
(22) Anmeldetag: 01.04.2025
(51) Int. Cl.: G01D 3/08, G01D 5/20

(54) **INDUKTIVE SENSORANORDNUNG ZUR ERFASSUNG EINER BEWEGUNG EINES BEWEGLICHEN KÖRPERS**

(30) Priorität: 11.04.2024 DE 102024203299
(71) Anmelder: Robert Bosch GmbH, 70442 Stuttgart (DE)
(72) Erfinder: Krzyzanowski, Tim, 74348 Lauffen Am Neckar (DE); Kivijarvi, Ville, 00910 Helsinki (FI); Karcher, Christian, 77815 Buehl (DE); Yashan, Andre, 70569 Stuttgart (DE); Fella, Sina, 74196 Neuenstadt (DE); Dauth, Robert Alexander, 74080 Heilbronn (DE); Pereira, Debora, 4400-053 Vila Nova de Gaia (PT); Kuntz, Stefan, 74223 Flein (DE)

(57) **Zusammenfassung**

Die Erfindung betrifft eine induktive Sensoranordnung (1) zur Erfassung einer Bewegung eines beweglichen Körpers (3), mit einer Messwerterfassungsvorrichtung (10), welche eine Erregerstruktur (14) und eine Empfangsstruktur (16) umfasst, und einer Koppelvorrichtung (20), wobei eine Auswerte- und Steuereinheit (5) ausgeführt ist, während des Betriebs ein periodisches Wechselsignal in die Erregerstruktur (14) einzukoppeln und in der Empfangsstruktur (16) induzierte Signale auszuwerten und ein Messsignal (MS) zu bestimmen, wobei die Koppelvorrichtung (20) einen Grundkörper (22) mit mindestens einem elektrisch leitenden Koppelsegment (24) aufweist und ausgeführt ist, eine induktive Kopplung zwischen der Erregerstruktur (14) und der Empfangsstruktur (16) zu beeinflussen, wobei ein Überdeckungsverhältnis, welches sich aus einer Überdeckungsabmessung des elektrisch leitenden Koppelsegments (24) in Bewegungsrichtung (BR) bezogen auf einen periodischen Abschnitt (PA) der Empfangsstruktur (16) berechnet, in Abhängigkeit von einem resultierenden Messfehler und einer resultierenden Amplitude des Messsignals (MS) so gewählt ist, dass der resultierende Messfehler des Messsignals (MS) einen vorgegebenen ersten Schwellwert unterschreitet, welcher bei einem Überdeckungsverhältnis von 0,5 vorliegt, und die resultierende Amplitude einen vorgegebenen bauartbedingten zweiten Schwellwert überschreitet.

## Beschreibung

Die Erfindung betrifft eine induktive Sensoranordnung zur Erfassung einer Bewegung eines beweglichen Körpers.

Aus dem Stand der Technik sind induktive Sensoranordnungen bekannt, welche als Drehbewegungssensor zur Erfassung einer Drehbewegung oder als Linearwegsensor zur Erfassung einer Linearbewegung eingesetzt werden. Eine solche induktive Sensoranordnung umfasst eine Messwerterfassungsvorrichtung mit mindestens einer Erregerstruktur und mindestens einer Empfangsstruktur und mindestens eine Koppelvorrichtung, welche auch als Target bezeichnet wird. Hierbei ist die Messwerterfassungsvorrichtung oder die mindestens einer Koppelvorrichtung mit dem beweglichen Körper gekoppelt. Zudem umfasst die mindestens eine Erregerstruktur mindestens eine Erregerspule. Die mindestens eine Koppelvorrichtung umfasst mindestens ein elektrisch leitendes Koppelsegment. Die mindestens eine Empfangsstruktur weist mindestens eine, meist jedoch zwei Empfangsspulen auf. Die mindestens eine Erregerspule wird von einem hochfrequenten Strom durchflossen, welcher ein magnetisches Wechselfeld erzeugt, welches in der mindestens einen Koppelvorrichtung Wirbelströme induziert. Hierbei hängt die induktive Kopplung der mindestens einen Erregerspule und der mindestens einen Empfangsspule von der Position der korrespondierenden Koppelvorrichtung ab. Durch das induzierte Spannungssignal in der mindestens einen Empfangsspule kann auf die aktuelle Position der Koppelvorrichtung und somit auf die aktuelle Position eines Körpers geschlossen werden, dessen Bewegung erfasst werden soll.

### Offenbarung der Erfindung

Die induktive Sensoranordnung zur Erfassung einer Bewegung eines beweglichen Körpers mit den Merkmalen des unabhängigen Patentanspruchs 1 hat den Vorteil, dass über die Auswahl eines Überdeckungsverhältnisses, welches sich aus einer Überdeckungsabmessung des mindestens einen elektrisch leitenden Koppelsegments in Bewegungsrichtung bezogen auf einen periodischen Abschnitt der mindestens einen Empfangsstruktur berechnet, ein möglichst kleiner Messfehler des Messsignals und eine möglichst große Amplitude des Messsignals eingestellt werden kann. Dadurch kann durch Ausführungsformen der erfindungsgemäßen induktiven Sensoranordnung eine Amplitude von einer in der mindestens einen Empfangsstruktur induzierten Spannung und des resultierenden Messsignals erhöht und gleichzeitig ein Messfehler der Messwerterfassungsvorrichtung bzw. der induktive Sensoranordnung verkleinert werden. So können beispielsweise bei der Erfassung einer Drehbewegung Winkelfehler und bei der Erfassung von Linearbewegungen Wegfehler reduziert werden. Kleinere Messfehler ermöglichen einen kleineren Bauraum und einen Verzicht auf eine harmonische Korrektur. Die größere Amplitude des Messsignals bewirkt ein besseres Signal-zu-Rauschverhältnis und eine bessere EMV-Robustheit (EMV: Elektromagnetische Verträglichkeit). Zudem ermöglicht die größere Amplitude des Messsignals größere Luftspalte und dadurch eine Kosteneinsparung in der Mechanik. Des Weiteren ermöglicht die größere Amplitude des Messsignals den Einsatz von kostengünstigeren Halbleiterverstärkern mit geringeren Verstärkungsfaktoren.

Ausführungsformen der vorliegenden Erfindung stellen eine induktive Sensoranordnung zur Erfassung einer Bewegung eines beweglichen Körpers, mit mindestens einer Messwerterfassungsvorrichtung, welche mindestens eine Erregerstruktur und mindestens eine Empfangsstruktur umfasst, und mindestens einer Koppelvorrichtung zur Verfügung. Hierbei ist die mindestens eine Messwerterfassungsvorrichtung oder die mindestens einer Koppelvorrichtung mit dem beweglichen Körper gekoppelt. Mindestens eine Auswerte- und Steuereinheit ist ausgeführt, während des Betriebs ein periodisches Wechselsignal in die mindestens eine Erregerstruktur einzukoppeln und in der mindestens einen Empfangsstruktur induzierte Signale auszuwerten und ein Messsignal für eine aktuelle Position des beweglichen Körpers zu bestimmen. Die mindestens eine Koppelvorrichtung weist einen Grundkörper mit mindestens einem elektrisch leitenden Koppelsegment auf und ist ausgeführt, eine induktive Kopplung zwischen der mindestens einen Erregerstruktur und der mindestens einen Empfangsstruktur zu beeinflussen. Hierbei ist ein Überdeckungsverhältnis, welches sich aus einer Überdeckungsabmessung des mindestens einen elektrisch leitenden Koppelsegments in Bewegungsrichtung bezogen auf einen periodischen Abschnitt der mindestens einen Empfangsstruktur berechnet, in Abhängigkeit von einem resultierenden Messfehler und einer resultierenden Amplitude des Messsignals so gewählt, dass der resultierende Messfehler des Messsignals einen vorgegebenen ersten Schwellwert unterschreitet, welcher bei einem Überdeckungsverhältnis von 0,5 vorliegt, und die resultierende Amplitude einen vorgegebenen bauartbedingten zweiten Schwellwert überschreitet.

Die induktive Sensoranordnung kann beispielsweise als Drehwinkelsensor bzw. Rotorlagesensor ausgeführt, bei welcher der bewegliche Körper eine zu erfassende Drehbewegung um eine Drehachse ausführt. Alternativ kann die induktive Sensoranordnung als Linearwegsensor ausgeführt sein, bei welcher der bewegliche Körper eine zu erfassende eine Linearbewegung ausführt.

Unter einer Auswerte- und Steuereinheit kann vorliegend eine elektrische Baugruppe bzw. elektrische Schaltung verstanden werden, welche erfasste Sensorsignale aufbereitet bzw. verarbeitet bzw. auswertet. Vorzugsweise kann die Auswerte- und Steuereinheit als ASIC-Baustein (ASIC: Anwendungsspezifische integrierte Schaltung) ausgeführt sein. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil des ASIC-Bausteins sein. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Unter der Erregerstruktur kann nachfolgend eine Erregerspule mit einer vorgegebenen Windungszahl verstanden werden, welche das von der mindestens einen Oszillatorschaltung eingekoppelte Wechselsignal aussendet.

Durch die in den abhängigen Ansprüchen aufgeführten Maßnahmen und Weiterbildungen sind vorteilhafte Verbesserungen der im unabhängigen Patentanspruch 1 angegebenen induktiven Sensoranordnung möglich.

Besonders vorteilhaft ist, dass die mindestens eine Empfangsstruktur mindestens eine Empfangsspule mit mindestens einer Windung umfassen kann, welche zwei sich periodisch wiederholende Schleifenstrukturen aufweist. Hierbei sind die beiden Schleifenstrukturen der einzelnen Windungen um 180 Grad versetzt zueinander angeordnet. Dies ermöglicht eine besonders kostengünstige und einfache Realisierung der mindestens einen Empfangsstruktur. Hierbei kann der periodische Abschnitt der mindestens einen Empfangsstruktur einer vollständigen Periode der sich periodisch wiederholenden Schleifenstrukturen der mindestens einen Empfangsspule entsprechen. Vorzugsweise kann die mindestens eine Empfangsstruktur zwei Empfangsspulen aufweisen, welche um 90 Grad versetzt zueinander angeordnet sind, so dass eine erste Empfangsspule einen Sinuskanal und eine zweite Empfangsspule einen Cosinuskanal ausbilden kann. Zudem kann die mindestens eine Auswerte- und Steuereinheit ausgeführt sein, aus einem Signal des Sinuskanals und aus einem Signal des Cosinuskanals durch eine Arcustangensfunktion das Messsignal zu bestimmen. Alternativ kann die Empfangsstruktur drei Empfangsspulen mit einer sich periodisch wiederholenden Schleifenstruktur aufweisen, welche ein Mehrphasensystem ausbilden. Hierbei kann die mindestens eine Auswerte- und Steuereinheit ausgeführt sein, eine geeignete Phasentransformation von Signalen des Mehrphasensystems durchzuführen und mittels einer Arcustangensfunktion das Messsignal zu bestimmen. So können beispielsweise Signale eines Dreiphasensystems mittels einer Clarke-Transformation in zwei Signale transformiert werden, aus denen dann mittels der Arcustangensfunktion das Messsignal bestimmt werden kann.

In weiterer vorteilhafter Ausgestaltung der induktiven Sensoranordnung kann das Überdeckungsverhältnis aus einem Bereich von 0,7 bis 0,8, vorzugsweise aus einem Bereich von 0,7 bis 0,75 ausgewählt sein. Insbesondere der Bereich von 0,7 bis 0,75 kann die Vorteile von niedrigem Messfehler und hoher Amplitude der induzierten Spannung und des korrespondierenden Messsignals vereinen. Typischerweise kann die Amplitude der induzierten Spannung bei einem größere Überdeckungsverhältnis als 0,75 wieder abnehmen, während der Messfehler auch zunehmen kann. Dadurch ist das Überdeckungsverhältnis insbesondere in einem Bereich von mehr als 0,8 nicht mehr vorteilhaft. Unterhalb von einem Überdeckungsverhältnis von weniger als 0,7 kann der Winkelfehler typischerweise ansteigen, und die Amplitude der induzierten Spannung abnehmen. Dadurch ist insbesondere das Überdeckungsverhältnis in einem Bereich kleiner als 0,6 nicht mehr vorteilhaft. Bei einem Überdeckungsverhältnis im Bereich von 0,3 bis 0,4 kann bauartbedingt ein weiteres lokales Minimum des Messfehlers gegeben sein. Allerdings ist die Amplitude der induzierten Spannung hier signifikant niedriger als im Bereich zwischen 0,7 bis 0,8.

In weiterer vorteilhafter Ausgestaltung der induktiven Sensoranordnung kann das Überdeckungsverhältnis und/oder der bauartbedingte zweite Schwellwert der resultierenden Amplitude des Messsignals in Abhängigkeit von einem Luftspalt zwischen der mindestens einen Koppelvorrichtung und der mindestens einen Empfangsstruktur und/oder von einer Periodizität der mindestens einen Empfangsstruktur und/oder von einer Geometrie der mindestens einen Empfangsstruktur vorgegeben sein. Dadurch ist es in vorteilhafter Weise möglich, dass das Überdeckungsverhältnis und/oder der zweite Schwellwert in Abhängigkeit von der mechanischen Ausführung der induktiven Sensoranordnung vorgegeben werden kann.

In weiterer vorteilhafter Ausgestaltung der induktiven Sensoranordnung können die beiden Schleifenstrukturen der mindestens einen Windung der mindestens einen Empfangsspule jeweils mehrere Schleifenabschnitte aufweisen und in mindestens zwei Ebenen eines Schaltungsträgers ausgebildet sein und entgegengesetzte Durchflussrichtungen aufweisen. Hierbei können in verschiedenen Ebenen des Schaltungsträgers angeordnete Abschnitte der einzelnen Schleifenstrukturen über Durchkontaktierungen elektrisch miteinander verbunden sein.

In weiterer vorteilhafter Ausgestaltung der induktiven Sensoranordnung kann der bewegliche Körper eine Drehbewegung um eine Drehachse ausführen, bei welcher der Messfehler einem Winkelfehler entspricht. Zur Erfassung der Drehbewegung des beweglichen Körpers um eine Drehachse kann die mindestens eine Koppelvorrichtung einen als Rotor ausgeführten Grundkörper aufweisen. Hierbei kann das mindestens eine elektrisch leitende Koppelsegment als Flügel ausgeführt und mit dem als Rotor ausgeführten Grundkörper verbunden sein. Bei dieser Ausführungsform der mindestens einen Koppelvorrichtung kann die Überdeckungsabmessung des mindestens einen elektrisch leitenden Koppelsegments in Bewegungsrichtung einem Kreisbogen oder einem Kreisringsegment entsprechen.

Alternativ kann der bewegliche Körper eine Linearbewegung ausführen, bei welcher der Messfehler einem Wegfehler entspricht. Zur Erfassung der Linearbewegung des beweglichen Körpers kann die mindestens eine Koppelvorrichtung einen als Träger ausgeführten Grundkörper aufweisen. Hierbei kann das mindestens eine elektrisch leitende Koppelsegment als Fläche ausgeführt und auf dem als Träger ausgeführten Grundkörper angeordnet sein. Bei dieser Ausführungsform der mindestens einen Koppelvorrichtung kann die Überdeckungsabmessung des mindestens einen elektrisch leitenden Koppelsegments in Bewegungsrichtung einer Geraden oder einem Rechteck entsprechen.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Darstellung eines ersten Ausführungsbeispiels einer erfindungsgemäßen induktiven Sensoranordnung zur Erfassung einer Bewegung eines beweglichen Körpers.
Fig. 2 zeigt eine schematische Draufsicht auf die erfindungsgemäße induktiven Sensoranordnung aus Fig.1 mit einer durchsichtig dargestellten Koppelvorrichtung.
Fig. 3 zeigt eine schematische Draufsicht auf ein zweites Ausführungsbeispiel einer erfindungsgemäßen induktiven Sensoranordnung mit einer durchsichtig dargestellten Koppelvorrichtung.
Fig. 4 zeigt ein schematisches Kennliniendiagramm mit zwei Kennlinien, welche jeweils einen Messfehler-Überdeckungsverhältnis-Verlauf der erfindungsgemäßen induktiven Sensoranordnung repräsentieren, und einer Kennlinie, welche einen Amplituden-Überdeckungsverhältnis-Verlauf der erfindungsgemäßen induktiven Sensoranordnung repräsentiert.

### Ausführungsformen der Erfindung

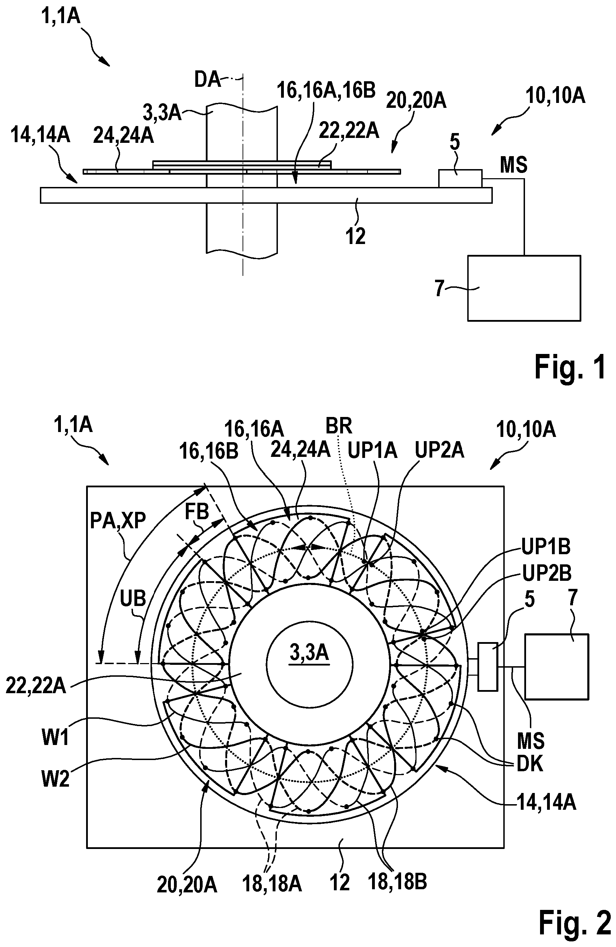

Wie aus Fig. 1 bis 3 ersichtlich ist, umfassen die dargestellten Ausführungsbeispiele einer erfindungsgemäßen induktiven Sensoranordnung 1 zur Erfassung einer Bewegung eines beweglichen Körpers 3 jeweils mindestens eine Messwerterfassungsvorrichtung 10, welche mindestens eine Erregerstruktur 14 und mindestens eine Empfangsstruktur 16 umfasst, und mindestens eine Koppelvorrichtung 20. Hierbei ist die mindestens eine Messwerterfassungsvorrichtung 10 oder die mindestens einer Koppelvorrichtung 20 mit dem beweglichen Körper 3 gekoppelt. Zudem ist mindestens eine Auswerte- und Steuereinheit 5 ausgeführt, während des Betriebs ein periodisches Wechselsignal in die mindestens eine Erregerstruktur 14 einzukoppeln und in der mindestens einen Empfangsstruktur 16 induzierte Signale auszuwerten und ein Messsignal MS für eine aktuelle Position des beweglichen Körpers 3 zu bestimmen. Die mindestens eine Koppelvorrichtung 20 weist einen Grundkörper 22 mit mindestens einem elektrisch leitenden Koppelsegment 24 auf und ist ausgeführt, eine induktive Kopplung zwischen der mindestens einen Erregerstruktur 14 und der mindestens einen Empfangsstruktur 16 zu beeinflussen. Ein Überdeckungsverhältnis UV, welches sich aus einer Überdeckungsabmessung UB des mindestens einen elektrisch leitenden Koppelsegments 24 in Bewegungsrichtung BR bezogen auf einen periodischen Abschnitt PA der mindestens einen Empfangsstruktur 16 berechnet, ist in Abhängigkeit von einem resultierenden Messfehler MF und einer resultierenden Amplitude AM des Messsignals MS so gewählt, dass der resultierende Messfehler MF des Messsignals MS einen vorgegebenen ersten Schwellwert SW1 unterschreitet, welcher bei einem Überdeckungsverhältnis UV von 0,5 vorliegt, und die resultierende Amplitude AM einen vorgegebenen bauartbedingten zweiten Schwellwert SW2 überschreitet.

In den dargestellten Ausführungsbeispielen der induktiven Sensoranordnung 1 gibt die Auswerte- und Steuereinheit 5 das Messsignal an ein übergeordnetes Steuergerät 7 aus, welche das Messsignal zur Ansteuerung von korrespondierenden Fahrzeugfunktionen auswertet.

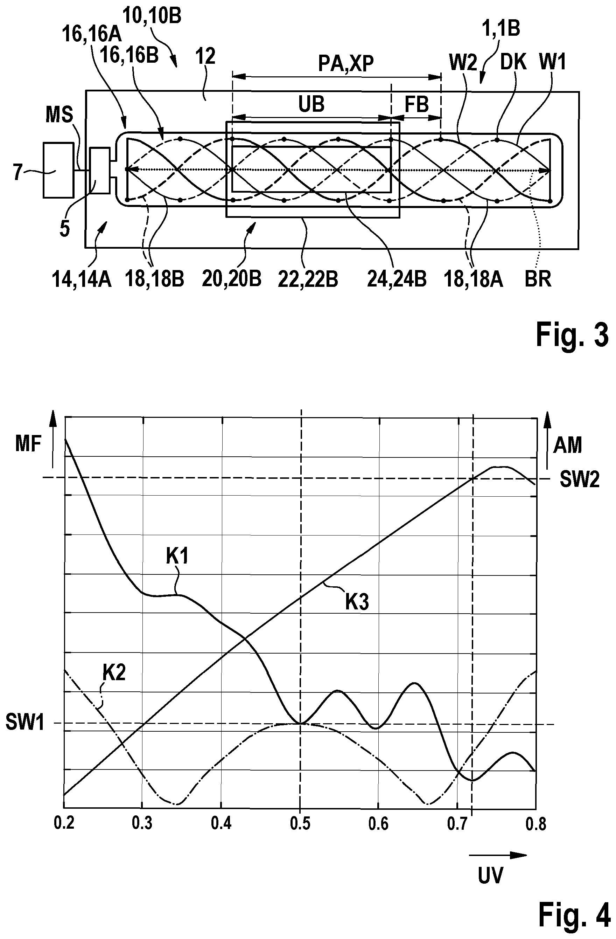

Wie insbesondere aus Fig. 2 und 3 weiter ersichtlich ist, umfassen die dargestellten Ausführungsbeispiele der induktiven Sensoranordnung 1 jeweils einen Schaltungsträger 12 mit einer Erregerstruktur 14, welche in den dargestellten Ausführungsbeispielen der induktiven Sensoranordnung 1 eine Erregerspule 14A mit in zwei Ebenen des Schaltungsträgers 12 angeordneten Windungen umfasst, und einer Empfangsstruktur 16, welche zwei Empfangsspulen 16A, 16B mit einer Windung W1, W2 umfasst. Die einzelnen Windungen W1, W2 der beiden Empfangsspulen 16A, 16B weisen jeweils zwei sich periodisch wiederholende Schleifenstrukturen 18A, 18B auf. Hierbei sind die beiden Schleifenstrukturen 18A, 18B der einzelnen Windungen W1, W2 um 180 Grad versetzt zueinander angeordnet.

Wie aus Fig. 2 und 3 weiter ersichtlich ist, weisen die beiden Schleifenstrukturen 18A, 18B der einzelnen Windungen W1, W2 der beiden Empfangsspulen 16A, 16B jeweils mehrere Schleifenabschnitte auf, welche in mindestens zwei Ebenen des Schaltungsträgers 12 ausgebildet sind und entgegengesetzte Durchflussrichtungen aufweisen. In verschiedenen Ebenen des Schaltungsträgers 12 angeordnete Abschnitte der einzelnen Schleifenstrukturen 18A, 18B sind über Durchkontaktierungen DK elektrisch miteinander verbunden. Zudem entspricht der periodische Abschnitt PA der dargestellten Empfangsstrukturen 16 jeweils einer vollständigen Periode XP der sich periodisch wiederholenden Schleifenstrukturen 18A, 18B der beiden Empfangsspulen 16A, 16B.

Wie aus Fig. 4 weiter ersichtlich ist, zeigt das dargestellte Kennliniendiagramm zwei Kennlinien K1, K2, welche beispielhaft jeweils einen Verlauf des Messfehlers MF des Messsignals MS in Abhängigkeit vom Überdeckungsverhältnis UV zeigen, und eine dritte Kennlinie K3, welche beispielhaft den Verlauf der Amplitude AM des Messsignals MS in Abhängigkeit vom Überdeckungsverhältnis UV zeigen.

Wie aus Fig. 4 weiter ersichtlich ist, entspricht der erste Schwellwert SW1 für den Messfehler MF dem Wert des Messfehlers MF bei einem Überdeckungsverhältnis von 0,5. Bei Ausführungsformen der induktiven Sensoranordnung 1 ist das Überdeckungsverhältnis UV aus einem Bereich von 0,7 bis 0,8 ausgewählt. Insbesondere der Bereich von 0,7 bis 0,75 vereint die Vorteile von niedrigem Messfehler MF und hoher Amplitude AM der induzierten Spannung bzw. des korrespondierenden Messsignals MS.

Wie aus Fig. 4 weiter ersichtlich ist, steigt die Amplitude der induzierten Spannung bzw. des Messsignals MS bei einem größere Überdeckungsverhältnis UV als 0,72 weiter an, während der Messfehler MF aber signifikant weiter zunimmt, insbesondere bei der durch die zweite Kennlinie K2 repräsentierten Bauform. Dadurch ist das Überdeckungsverhältnis UV insbesondere bei der durch die zweite Kennlinie K2 repräsentierten Bauform in einem Bereich von mehr als 0,8 nicht mehr vorteilhaft. Unterhalb von einem Überdeckungsverhältnis von weniger als 0,7 kann der Winkelfehler, insbesondere bei der durch die erste Kennlinie K1 repräsentierten Bauform ansteigen, und die Amplitude AM der induzierten Spannung bzw. des Messsignals MS abnehmen. Dadurch ist das Überdeckungsverhältnis UV in einem Bereich kleiner als 0,6 insbesondere bei der durch die erste Kennlinie K1 repräsentierten Bauform nicht mehr vorteilhaft. Bei einem Überdeckungsverhältnis UV im Bereich von 0,3 bis 0,4 kann bauartbedingt, insbesondere bei der durch die zweite Kennlinie K2 repräsentierten Bauform ein weiteres lokales Minimum des Messfehlers MS gegeben sein. Allerdings ist die Amplitude AM der induzierten Spannung bzw. des Messsignals MS hier signifikant niedriger als im Bereich zwischen 0,7 bis 0,8.

Das Überdeckungsverhältnis UV und/oder der bauartbedingte zweite Schwellwert SW2 der resultierenden Amplitude AM des Messsignals MS ist in Abhängigkeit von einem Luftspalt zwischen der mindestens einen Koppelvorrichtung 20 und der mindestens einen Empfangsstruktur 16 und/oder von einer Periodizität der mindestens einen Empfangsstruktur 16 und/oder von einer Geometrie der mindestens einen Empfangsstruktur 16 vorgegeben. In den dargestellten Ausführungsbeispielen weist das vorgegebene Überdeckungsverhältnis UV jeweils einen Wert von 0,72 auf.

Wie aus Fig. 1 und 2 weiter ersichtlich ist, ist das dargestellte erste Ausführungsbeispiel der induktiven Sensoranordnung 1 als Drehbewegungssensor 1A ausgeführt. Daher führt der bewegliche Körper 3 eine Drehbewegung um eine Drehachse DA aus, bei welcher der Messfehler MF einem Winkelfehler entspricht.

Wie aus Fig. 1 und 2 weiter ersichtlich ist, weist die Koppelvorrichtung 20A im dargestellten Ausführungsbeispiel des Drehbewegungssensor 1A einen als Rotor 22A ausgeführten Grundkörper 22 auf, da der bewegliche Körper 3 die Drehbewegung um eine Drehachse DA ausführt. Hierbei ist das mindestens eine elektrisch leitende Koppelsegment 24 als Flügel 24A ausgeführt und mit dem als Rotor 22A ausgeführten Grundkörper 22 verbunden. Das bedeutet, dass im dargestellten Ausführungsbeispiel des Drehbewegungssensors 1A die Überdeckungsabmessung UB des elektrisch leitenden Koppelsegments 24 in Bewegungsrichtung BR einem Kreisringsegment entspricht, welches nur einen Teil des periodischen Abschnitts PA der dargestellten Empfangsstruktur 16 bzw. der vollständigen Periode XP der sich periodisch wiederholenden Schleifenstrukturen 18A, 18B der beiden Empfangsspulen 16A, 16B in Bewegungsrichtung BR überdeckt und einen unbedeckten freien Abschnitt FB in Bewegungsrichtung BR freilässt. Im dargestellten Ausführungsbeispiel bildet der gesamte Flügel 24A das Kreisringsegment aus. Bei einem alternativen nicht dargestellten Ausführungsbeispiel eines Drehbewegungssensors 1A kann die Überdeckungsabmessung UB des elektrisch leitenden Koppelsegments 24 in Bewegungsrichtung BR nur einen Teil des Flügels 24A überdecken. Im Extremfall kann die Überdeckungsabmessung UB des elektrisch leitenden Koppelsegments 24 in Bewegungsrichtung BR nur einem auf dem Flügel 24A angebrachten Kreisbogen entsprechen.

Wie aus Fig. 3 weiter ersichtlich ist, ist das dargestellte Ausführungsbeispiel der induktiven Sensoranordnung 1 als Linearwegsensor 1B ausgeführt. Daher führt der hier nicht näher dargestellte bewegliche Körper eine Linearbewegung aus, bei welcher der Messfehler MF einem Wegfehler entspricht.

Wie aus Fig. 3 weiter ersichtlich ist, weist die Koppelvorrichtung 20B im dargestellten Ausführungsbeispiel des Linearwegsensors 1B einen als Träger 22B ausgeführten Grundkörper 22 auf, da der bewegliche Körper 3 eine Linearbewegung ausführt. Hierbei ist das mindestens eine elektrisch leitende Koppelsegment 24 als Fläche 24B ausgeführt und auf dem als Träger 22B ausgeführten Grundkörper 22 angeordnet. Das bedeutet, dass im dargestellten Ausführungsbeispiel des Linearwegsensors 1B die Überdeckungsabmessung UB des elektrisch leitenden Koppelsegments 24 in Bewegungsrichtung BR einer rechteckigen Fläche 24B entspricht, welche nur einen Teil des periodischen Abschnitts PA der dargestellten Empfangsstruktur 16 bzw. der vollständigen Periode XP der sich periodisch wiederholenden Schleifenstrukturen 18A, 18B der beiden Empfangsspulen 16A, 16B in Bewegungsrichtung BR überdeckt und einen unbedeckten freien Abschnitt FB in Bewegungsrichtung BR freilässt. Im dargestellten Ausführungsbeispiel überdeckt die rechteckige Fläche 24B einen Teil des Trägers 22B. Bei einem alternativen nicht dargestellten Ausführungsbeispiel eines Linearwegsensors 1B kann die Überdeckungsabmessung UB des elektrisch leitenden Koppelsegments 24 in Bewegungsrichtung BR einen größeren oder einen kleineren Teil des Trägers 22B überdecken. Im Extremfall kann die Überdeckungsabmessung UB des elektrisch leitenden Koppelsegments 24 in Bewegungsrichtung BR nur einer auf dem Träger 22B angebrachten Geraden entsprechen.

## Patentansprüche

1. Induktive Sensoranordnung (1) zur Erfassung einer Bewegung eines beweglichen Körpers (3), mit mindestens einer Messwerterfassungsvorrichtung (10), welche mindestens eine Erregerstruktur (14) und mindestens eine Empfangsstruktur (16) umfasst, und mindestens einer Koppelvorrichtung (20), wobei die mindestens eine Messwerterfassungsvorrichtung (10) oder die mindestens einer Koppelvorrichtung (20) mit dem beweglichen Körper (3) gekoppelt ist, wobei mindestens eine Auswerte-und Steuereinheit (5) ausgeführt ist, während des Betriebs ein periodisches Wechselsignal in die mindestens eine Erregerstruktur (14) einzukoppeln und in der mindestens einen Empfangsstruktur (16) induzierte Signale auszuwerten und ein Messsignal (MS) für eine aktuelle Position des beweglichen Körpers (3) zu bestimmen, wobei die mindestens eine Koppelvorrichtung (20) einen Grundkörper (22) mit mindestens einem elektrisch leitenden Koppelsegment (24) aufweist und ausgeführt ist, eine induktive Kopplung zwischen der mindestens einen Erregerstruktur (14) und der mindestens einen Empfangsstruktur (16) zu beeinflussen, wobei ein Überdeckungsverhältnis (UV), welches sich aus einer Überdeckungsabmessung (UB) des mindestens einen elektrisch leitenden Koppelsegments (24) in Bewegungsrichtung (BR) bezogen auf einen periodischen Abschnitt (PA) der mindestens einen Empfangsstruktur (16) berechnet, in Abhängigkeit von einem resultierenden Messfehler (MF) und einer resultierenden Amplitude (AM) des Messsignals (MS) so gewählt ist, dass der resultierende Messfehler (MF) des Messsignals (MS) einen vorgegebenen ersten Schwellwert (SW1) unterschreitet, welcher bei einem Überdeckungsverhältnis (UV) von 0,5 vorliegt, und die resultierende Amplitude (AM) einen vorgegebenen bauartbedingten zweiten Schwellwert (SW2) überschreitet.

2. Induktive Sensoranordnung (1) nach Anspruch 1, **dadurch gekennzeichnet, dass** die mindestens eine Empfangsstruktur (16) mindestens eine Empfangsspule (16A, 16B) mit mindestens einer Windung (W1, W2) umfasst, welche zwei sich periodisch wiederholende Schleifenstrukturen (18A, 18B) aufweist.

3. Induktive Sensoranordnung (1) nach Anspruch 2, **dadurch gekennzeichnet, dass** der periodische Abschnitt (PA) der mindestens einen Empfangsstruktur (16) einer vollständigen Periode (XP) der sich periodisch wiederholenden Schleifenstrukturen (18A, 18B) der mindestens einen Empfangsspule (16A, 16B) entspricht.

4. Induktive Sensoranordnung (1) nach einem der Ansprüche 1 bis 3, **dadurch gekennzeichnet, dass** das Überdeckungsverhältnis (UV) aus einem Bereich von 0,7 bis 0,8, vorzugsweise aus einem Bereich von 0,7 bis 0,75 ausgewählt ist.

5. Induktive Sensoranordnung (1) nach einem der Ansprüche 1 bis 4, **dadurch gekennzeichnet, dass** das Überdeckungsverhältnis (UV) und/oder der bauartbedingte zweite Schwellwert (SW2) der resultierenden Amplitude (AM) des Messsignals (MS) in Abhängigkeit von einem Luftspalt zwischen der mindestens einen Koppelvorrichtung (20) und der mindestens einen Empfangsstruktur (16) und/oder von einer Periodizität der mindestens einen Empfangsstruktur (16) und/oder von einer Geometrie der mindestens einen Empfangsstruktur (16) vorgegeben ist.

6. Induktive Sensoranordnung (1) nach einem der Ansprüche 2 bis 5, **dadurch gekennzeichnet, dass** die beiden Schleifenstrukturen (18A, 18B) der mindestens einen Windung (W1, W2) der mindestens einen Empfangsspule (16A, 16B) jeweils mehrere Schleifenabschnitte aufweisen und in mindestens zwei Ebenen eines Schaltungsträgers (12) ausgebildet sind und entgegengesetzte Durchflussrichtungen aufweisen.

7. Induktive Sensoranordnung (1) nach Anspruch 6, **dadurch gekennzeichnet, dass** in verschiedenen Ebenen des Schaltungsträgers (12) angeordnete Abschnitte der einzelnen Schleifenstrukturen (18A, 18B) über Durchkontaktierungen (DK) elektrisch miteinander verbunden sind.

8. Induktive Sensoranordnung (1) nach einem der Ansprüche 1 bis 7, **dadurch gekennzeichnet, dass** der bewegliche Körper (3) eine Drehbewegung um eine Drehachse (DA), bei welcher der Messfehler (MF) einem Winkelfehler entspricht, oder eine Linearbewegung ausführt, bei welcher der Messfehler (MF) einem Wegfehler entspricht.

9. Induktive Sensoranordnung (1) nach Anspruch 8, **dadurch gekennzeichnet, dass** die mindestens eine Koppelvorrichtung (20) einen als Rotor (22A) ausgeführten Grundkörper (22) aufweist, wenn der bewegliche Körper (3) die Drehbewegung um eine Drehachse (DA) ausführt.

10. Induktive Sensoranordnung (1) nach Anspruch 9, **dadurch gekennzeichnet, dass** das mindestens eine elektrisch leitende Koppelsegment (24) als Flügel (24A) ausgeführt und mit dem als Rotor (22A) ausgeführten Grundkörper (22) verbunden ist.

11. Induktive Sensoranordnung (1) nach Anspruch 9, **dadurch gekennzeichnet, dass** die mindestens eine Koppelvorrichtung (20) einen als Träger (22B) ausgeführten Grundkörper (22) aufweist, wenn der bewegliche Körper (3) eine Linearbewegung ausführt.

12. Induktive Sensoranordnung (1) nach Anspruch 11, **dadurch gekennzeichnet, dass** das mindestens eine elektrisch leitende Koppelsegment (24) als Fläche (24B) ausgeführt und auf dem als Träger (22B) ausgeführten Grundkörper (22) angeordnet ist.
